(19) Europäisches Patentamt / European Patent Office / Office européen des brevets

(11) **EP 4 523 518 A1**

(12) **EUROPEAN PATENT APPLICATION**
published in accordance with Art. 153(4) EPC

(43) Date of publication:
**19.03.2025 Bulletin 2025/12**

(21) Application number: **23803393.0**

(22) Date of filing: **21.04.2023**

(51) International Patent Classification (IPC):
*A01G 7/00* $^{(2006.01)}$    *A01G 22/05* $^{(2018.01)}$

(52) Cooperative Patent Classification (CPC):
**A01G 7/00; A01G 22/05**

(86) International application number:
**PCT/JP2023/016010**

(87) International publication number:
**WO 2023/218911 (16.11.2023 Gazette 2023/46)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority:  **09.05.2022  JP 2022077110**
**17.02.2023  JP 2023023805**

(71) Applicant: **FUJIFILM Corporation**
**Tokyo 106-8620 (JP)**

(72) Inventors:
• **HATTORI, Akiko**
**Ashigarakami-gun, Kanagawa 258-8577 (JP)**
• **HOSOKAWA, Takafumi**
**Ashigarakami-gun, Kanagawa 258-8577 (JP)**

(74) Representative: **HGF**
**HGF Limited**
**1 City Walk**
**Leeds LS11 9DX (GB)**

(54) **METHOD FOR GROWING FRUIT VEGETABLE PLANT, APPARATUS FOR GROWING FRUIT VEGETABLE PLANT, AND TOMATO PLANT**

(57)    Provided are: a method of cultivating a fruit vegetable plant including irradiating a fruit vegetable plant with artificial light under a light irradiation condition in which a fruit setting rate is 80% or more; a cultivation apparatus for a fruit vegetable plant; and a tomato plant.

## FIG. 3

EP 4 523 518 A1

**Description**

**BACKGROUND OF THE INVENTION**

1. Field of the Invention

The present disclosure relates to a method of cultivating a fruit vegetable plant, a cultivation apparatus for a fruit vegetable plant, and a tomato plant.

2. Description of the Related Art

In recent years, an artificial light type plant factory in which a plant such as a vegetable is cultivated by using an artificial light source such as a light emitting diode (LED) in a closed space is attracting attention.

Cultivation of plants in an artificial light type plant factory is not affected by the climate and the weather, and the problem of labor shortage can be solved. Therefore, plants can be cultivated throughout a year under certain conditions.

Fruit vegetable plants such as a tomato and a melon have a tall height, and from the viewpoint of space utilization efficiency in a plant factory, the distance from the upper surface direction to the plant body becomes long, thereby likely reducing light utilization efficiency. Therefore, the implementation of light irradiation from the side surface direction instead of light irradiation from the upper surface direction has been studied (see JP2011-050288A).

**SUMMARY OF THE INVENTION**

However, the present inventors have newly found that there is room for improvement in the fruit setting rate of fruit vegetable plants cultivated by light irradiation from the side surface direction.

An object to be achieved by an embodiment of the present disclosure is to provide a method of cultivating a fruit vegetable plant with an excellent fruit setting rate, a cultivation apparatus for a fruit vegetable plant, and a tomato plant.

Specific means for achieving the object are as follows.

<1> A method of cultivating a fruit vegetable plant, comprising irradiating a fruit vegetable plant with artificial light under a light irradiation condition in which a fruit setting rate is 80% or more.

<2> The method of cultivating a fruit vegetable plant according to <1>, in which the fruit vegetable plant is a tomato.

<3> The method of cultivating a fruit vegetable plant according to <1> or <2>, in which the fruit vegetable plant is irradiated with the artificial light from a direction of $0° \pm 30°$ and a direction of $90° \pm 30°$ with respect to a growth direction of a stem of the fruit vegetable plant.

<4> The method of cultivating a fruit vegetable plant according to any one of <1> to <3>, in which after confirmation of first flower bud differentiation of the fruit vegetable plant until confirmation of last fruit setting, the fruit vegetable plant is irradiated with the artificial light from a direction of $0° \pm 30°$ and a direction of $90° \pm 30°$ with respect to a growth direction of a stem of the fruit vegetable plant.

<5> The method of cultivating a fruit vegetable plant according to any one of <1> to <4>, in which a variation in light intensity between plant parts is generated in the fruit vegetable plant by the irradiation with the artificial light.

<6> The method of cultivating a fruit vegetable plant according to <5>, in which a light intensity $I_t$ of the artificial light with, which a growth point of the fruit vegetable plant is irradiated, and a light intensity $I_b$ of the artificial light, with which a central part of a lowest leaf of the fruit vegetable plant, is irradiated satisfy the following relationship:

$$I_b/I_t \leq 0.8.$$

<7> The method of cultivating a fruit vegetable plant according to any one of <1> to <6>, in which after confirmation of first flower bud differentiation of the fruit vegetable plant until confirmation of last fruit setting, a variation in light intensity between plant parts is generated.

<8> A cultivation apparatus for a fruit vegetable plant, including a light source that irradiates with artificial light from side surface direction and from upper surface direction of the fruit vegetable plant, and a control mechanism that controls a light irradiation condition such that a variation in light intensity between plant parts is generated in a case of irradiating the fruit vegetable plant with the artificial light.

<9> The cultivation apparatus for a fruit vegetable plant according to <8>, in which the control mechanism controls the light irradiation condition such that a light intensity It of the artificial light, with which a growth point of the fruit vegetable plant is irradiated, and a light intensity $I_b$ of the artificial light, with which a central part of a lowest leaf of the fruit vegetable plant is irradiated, satisfy the following relationship:

$$I_b/I_t \leq 0.8.$$

<10> A tomato plant that is cultivated by the method of cultivating a fruit vegetable plant according to any one of <1> to <7>.

According to an embodiment of the present disclosure, it is possible to provide a method of cultivating a fruit vegetable plant with an excellent fruit setting rate, a cultivation apparatus for a fruit vegetable plant, and a tomato plant.

## BRIEF DESCRIPTION OF THE DRAWINGS

Fig. 1 is a schematic top view showing an example of a cultivation system in which a lighting device is disposed between cultivation stocks.
Fig. 2 is a cross-sectional view taken along the line A-A of Fig. 1.
Fig. 3 is a schematic cross-sectional view showing an example of a cultivation system provided with a lighting device having a T-shaped cross-section.

## DESCRIPTION OF THE PREFERRED EMBODIMENTS

Hereinafter, embodiments for performing the present disclosure are described in detail. However, the present disclosure is not limited to the following embodiments. In the following embodiments, the components (including elements, steps, and the like) are not essential unless otherwise specified. The same applies to numerical values and ranges thereof, which do not limit the present disclosure.

In the present disclosure, a numerical range represented using "to" includes numerical values before and after "to" as a minimum value and a maximum value, respectively.

In the numerical ranges described stepwise in the present disclosure, the upper limit value or the lower limit value described in one numerical range may be replaced with the upper limit value or the lower limit value of the numerical range described stepwise in other stages. In addition, in a numerical range described in the present disclosure, an upper limit value or a lower limit value described in the numerical range may be replaced with a value described in a cultivation example.

In the present disclosure, the "fruit vegetable plant" means a plant of which harvested product is a fruit.

In the present disclosure, the "fruit setting rate" is obtained by the expression [number of fruit setting/number of buds] $\times$ 100. In the present disclosure, the "number of fruit setting" refers to the number of fruits that have set in a fruit vegetable plant, and the "number of buds" refers to the number of buds that have set in a fruit vegetable plant. In the present disclosure, the determination of the fruit setting is made based on whether or not a ratio ($L_f/L_h$) of the maximum transverse diameter $L_f$ in the fruit to the total length $L_h$ of the shortest calyx in the fruit is 0.2 or more, and in a case where the ratio is 0.2 or more, it is recognized that the fruit is set.

In the present disclosure, the "growth point" means the distal end of a main branch or a side branch (not shown) of a fruit vegetable plant, and also refers to the stem apex located at the tip part of the stem, which produces the extension part of the stem and new leaves. A region where the distance from the growth point is within 5 cm is included. In a case where the fruit vegetable plant is a plurality of tailoring, a plurality of growth points are present.

In the present disclosure, the "lowest leaf of a fruit vegetable plant" means the leaf of the fruit vegetable plant where the stem of the basal part of the leaf is closest to the root, and the "central part of the leaf" means the part that is 1/2X from the base of the leaf in a case where the full length of the leaf is X. In the present disclosure, the "growth direction of the stem of the fruit vegetable plant" means the direction in which the growth point of the stem of the fruit vegetable plant extends.

In the present disclosure, "mass" and "weight" are synonymous.

[Method of cultivating fruit vegetable plant]

In the method of cultivating a fruit vegetable plant according to the present disclosure, the fruit vegetable plant is irradiated with artificial light under a light irradiation condition where the fruit setting rate is 80% or more. By optimizing the light irradiation condition, the fruit vegetable plant can be effectively grown, and the fruit setting rate of the method of cultivating the fruit vegetable plant can be improved. The method of cultivating a fruit vegetable plant according to the present disclosure is particularly advantageous in that the fruit setting rate can be improved while maintaining high light utilization efficiency and high space utilization efficiency.

From the viewpoints of improving the fruit setting rate and improving space utilization efficiency, it is preferable that a variation in light intensity between plant parts is generated in the fruit vegetable plant by the irradiation with the artificial light. The variation in light intensity between plant parts can be generated by adjusting the angle of the artificial light to be irradiated, the number of irradiation directions of the artificial light, the light intensity of the artificial light, or the like.

From the viewpoints of improving the fruit setting rate and improving the light utilization efficiency, which is directly linked to the reduction of cultivation cost, it is preferable that the irradiation with the artificial light under the above-described condition is performed in a period after confirmation of first flower bud differentiation of the fruit vegetable plant until confirmation of last fruit setting.

In a period other than the above-described period, the irradiation with the artificial light may be performed such that the variation in light intensity between plant parts is not generated or the irradiation with the artificial light may be performed such that the variation in light intensity between plant parts is generated. However, from the viewpoint of reducing the cultivation cost, it is preferable that the irradiation with the artificial light is performed such that the variation in light intensity between plant parts is not generated.

From the viewpoints of improving the fruit setting rate and space utilization efficiency, it is preferable that light intensity It of the artificial light with which a growth point of the fruit vegetable plant is irradiated and the light intensity $I_b$ of the artificial light with which a central part of a lowest leaf of the fruit vegetable plant is irradiated satisfy the following relationship. Hereinafter, "$I_b/I_t$" is also referred to as "light intensity ratio".

$$I_b/I_t \leq 0.8.$$

From the viewpoint of improving the weight of the fruit to be harvested, the above-described light intensity ratio is preferably 0.7 or less and more preferably 0.5 or less. From the viewpoint of improving the weight of the fruit to be harvested, the lower limit of the light intensity ratio is preferably 0.3 or more and more preferably 0.4 or more.

In the case of a plant body having no growth point, such as after pinching, the light intensity It is the light intensity of the artificial light with which the central part of the uppermost leaf of the fruit vegetable plant. In addition, in a case where the fruit vegetable plant is a plurality of tailoring and a plurality of growth points are present, the light intensity It is the light intensity of the artificial light with which the growth point farthest from the central part of the lowest leaf of the fruit vegetable plant.

From the viewpoints of fruit setting rate, space utilization efficiency of a plant factory, and improvement of the weight of the fruit to be harvested, the above-described light intensity ratio is preferably 0.4 to 0.8.

In a case where the fruit vegetable plant is a plurality of tailoring, it is preferable that each of the plurality of growth points satisfies the above-described condition of the light intensity ratio.

The light intensity ratio can be adjusted by changing the type of light source used, the number of light sources used, the irradiation angle of the artificial light with which the fruit vegetable plant is irradiated, and the like.

The light intensity is measured by disposing the light-receiving surface of a measuring instrument toward the light source. As the measuring instrument, for example, a photon sensor (LI-190R, manufactured by LI-COR, Inc.) and the like can be used. In a case where the light sources are disposed in two or more directions from the fruit vegetable plant, the sum of the light intensities measured by disposing the measuring instrument toward respective light sources is defined as the light intensity.

From the viewpoints of improving the fruit setting rate and improving the light utilization efficiency to reduce cultivation costs, it is preferable that the irradiation with the artificial light under the above-described condition is performed in a period after confirmation of first flower bud differentiation of the fruit vegetable plant until confirmation of last fruit setting.

In a period other than the above-described period, the irradiation with the artificial light may be performed such that the light intensity ratio is more than 0.8, or the irradiation with the artificial light may be performed such that the light intensity ratio is 0.8 or less. However, from the viewpoint of reducing cultivation cost, it is preferable that the irradiation with the artificial light is performed such that the light intensity ratio is more than 0.8.

The fruit vegetable plant is preferably irradiated with the artificial light from a direction of 0° ± 30° and a direction of 90° ± 30° and the fruit vegetable plant from is more preferably irradiated with the artificial light from a direction of 0° ± 20° and a direction of 90° ± 20° with respect to the growth direction of the stem of the fruit vegetable plant.

By irradiating the fruit vegetable plant with the artificial light as described above, a suitable variation in light intensity between plant parts is generated in the irradiated fruit vegetable plant, and the fruit setting rate can be improved. In addition, the plant height of the fruit vegetable plant can be adjusted, and the space utilization efficiency of the plant factory can be improved.

From the viewpoints of improving the fruit setting rate and improving the light utilization efficiency to reduce cultivation costs, it is preferable that the irradiation with the artificial light under the above-described condition is performed in a period after confirmation of first flower bud differentiation of the fruit vegetable plant until confirmation of last fruit setting.

In a case where the fruit vegetable plant is a plurality of tailoring, it is preferable to perform the irradiation of the artificial light on each of the plurality of growth directions.

In a period other than the above-described period, the irradiation of the artificial light may be performed from one direction of 0° ± 30° or 90° ± 30° with respect to the growth direction of the stem of the fruit vegetable plant, or the irradiation of the artificial light may be performed from both directions of 0° ± 30° and 90° ± 30° with respect to the growth direction of the stem of the fruit vegetable plant. However, from the viewpoint of reducing cultivation costs, the irradiation of the artificial light is preferably performed from one direction of 0° ± 30° or 90° ± 30° with respect to the growth direction of the stem of the fruit vegetable plant and the irradiation of the artificial light is preferably performed from the direction of 0° ± 30° with respect to the growth direction of the stem of the fruit vegetable plant.

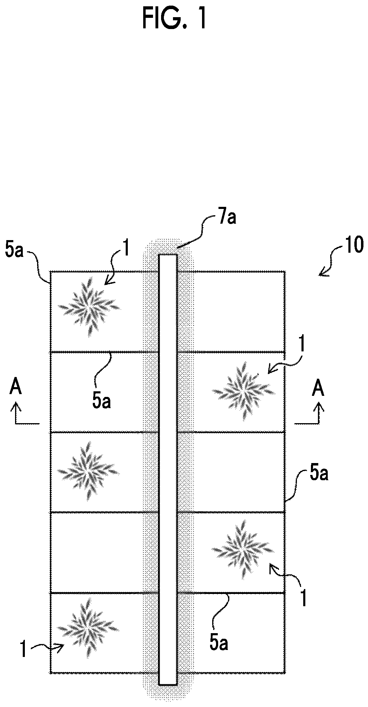

In a case where the fruit vegetable plant is irradiated with artificial light from the side surface direction and the upper surface direction, the light intensity of the artificial light, or the like is adjusted such that a variation in light intensity between plant parts is generated. In the cultivation of fruit vegetable plants, any aspect of cultivation system may be adopted for the growth of the fruit vegetable plants, and the arrangement relationship between the light source and the fruit vegetable plants in a case of irradiating with artificial light can also be appropriately selected. The cultivation system may be, for example, an aspect as shown in Figs. 1 to 3.

Fig. 1 is a schematic top view showing an example of a cultivation system in which an LED light source is disposed between stocks.

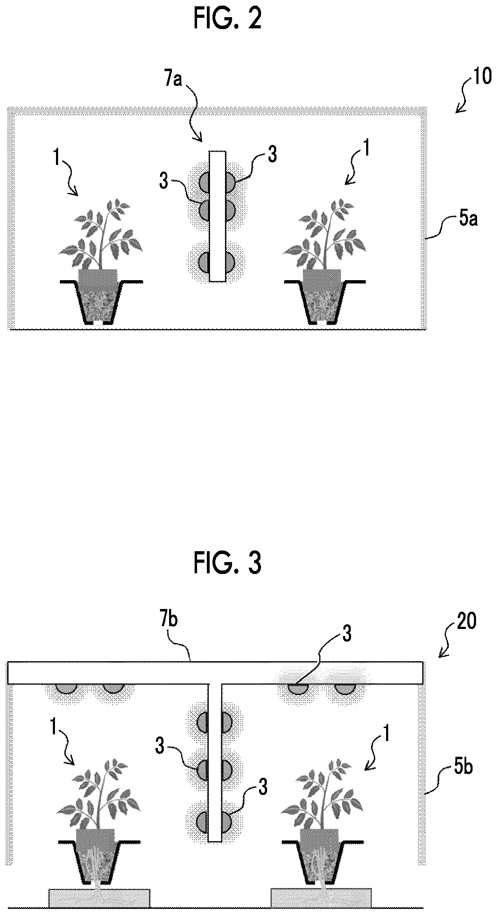

In the cultivation system 10 shown in Fig. 1, a region partitioned into equal areas on both sides of the lighting device 7a including the LED light source 3 is provided, and the cultivation stock 1 of a fruit vegetable plant is disposed in every other partitioned region. A certain distance is maintained between the plurality of cultivation stocks 1 such that the leaves of adjacent stocks do not overlap. In each partitioned region, the top surface and the side surface are covered with the reflection sheet 5a. Fig. 2 is a cross-sectional view taken along the line A-A of Fig. 1.

As shown in Fig. 2, the cultivation stock 1 is disposed on both sides of the lighting device 7a, and the top surface and the side surface of the cultivation stock 1 are covered with the reflection sheet 5a. The fruit vegetable plant is directly irradiated with the light emitted from the lighting device 7a from one side surface direction of the fruit vegetable plant, and the light is reflected by the reflection sheet 5a and the fruit vegetable plant is further irradiated with the reflected light from the other side surface direction of the fruit vegetable plant. In addition, the light emitted from the lighting device 7a to the top surface side is reflected by the reflection sheet 5a of the top surface and then reflected again by the reflection sheet of the side surface, and the fruit vegetable plant is further irradiated from the side surface direction of the fruit vegetable plant. In this way, the light utilization efficiency can be enhanced by covering the periphery of the cultivation stock with a reflection sheet or the like. In addition, by disposing the lighting device as shown in Fig. 1, the workability from the passage is also improved.

A plurality of LED light sources 3 are attached to the lighting device 7a.

The cultivation system shown in Fig. 2 may be an embodiment in which a support table (preferably, a cultivation shelf) provided with a support body (such as a urethane sponge) for supporting the root part of a cultivation stock is used, or an embodiment in which a support table (preferably, a cultivation shelf) provided with a cultivation panel where a plurality of holes for fixing the support body are disposed is used and the support body for supporting the root part of the cultivation stock is fixed to each hole of the cultivation panel for cultivation. The use of the support table is preferable from the viewpoints of cultivation management and workability, such as lateral bud picking, leaf picking, and harvesting in a period in which a fruit vegetable plant such as a tomato is cultivated.

Fig. 3 is a modified example of Fig. 2. Fig. 3 is a schematic cross-sectional view showing an example of a cultivation system in which a lighting device 7b having a T-shaped cross-section is attached instead of the reflection sheet of the top surface and the lighting device 7a in Fig. 2.

In the cultivation system 20 shown in Fig. 3, the LED light source 3 is also disposed on the top surface, and the fruit vegetable plant is directly irradiated with the irradiation light from both of the side surface direction of the fruit vegetable plant and the top surface. The side surface is covered with a reflection sheet 5b. As a result, the light intensity at the growth point can be secured.

A cycle of the light period and dark period (hereinafter, also referred to as a "light-dark cycle") of the artificial light with which the fruit vegetable plant is irradiated may be controlled.

In the present disclosure, the "light period" means a period in which the fruit vegetable plant is subjected to irradiation by the light source. In addition, the "dark period" means a period in which the fruit vegetable plant is not subjected to irradiation by the light source.

The light-dark cycle can be controlled by changing the use time of the light source.

A light source for the artificial light to be irradiated is not particularly limited, and examples thereof include semiconductor light sources such as a light emitting diode (LED), discharge lamps such as a fluorescent lamp, and the like. In the method of cultivating a fruit vegetable plant according to the present disclosure, an LED is preferably used.

One type of LED may be used, or two or more types of LEDs may be used.

The LED may emit visible light such as red, blue, and green, or may emit invisible light such as ultraviolet light (wavelength of 380 nm or less) or infrared light (wavelength of 780 nm or more). Among these, from the viewpoint of promoting photosynthesis of a fruit vegetable plant, an LED that emits light in a wavelength range of 400 nm to 700 nm is preferable. In addition, it is important to increase the fruit yield per stock from the viewpoint of improving energy efficiency and space utilization efficiency, and from such viewpoint, the combination of red LEDs and blue LEDs is more preferable. In particular, since the selection of the light source wavelength in the seedling raising period in the cultivation period of the tomato contributes to an increase or decrease in fruit yield, it is preferable to use a red LED and a blue LED in the seedling raising period. As a result, an increase in yield can be expected as compared with a seedling raising period in which a white LED is used, for example.

The cultivation temperature of the fruit vegetable plant is not particularly limited, but is preferably 23°C to 33°C and more preferably 25°C to 32°C in the light period. By setting the cultivation temperature in the light period within the above-described numerical range, the quality, the weight, and the like of the fruit to be harvested can be improved.

In addition, the cultivation temperature of the fruit vegetable plant in the dark period is preferably 15°C to 22°C and more preferably 16°C to 20°C. By setting the cultivation temperature in the dark period within the above-described numerical range, the quality, the weight, and the like of the fruit to be harvested can be improved.

In the present disclosure, the cultivation temperature is measured by disposing a thermometer at a position 1 cm away from the fruit vegetable plant. As the thermometer, for example, TR-74Ui manufactured by T & D Co., Ltd. and the attached sensors can be used.

A method of controlling the light period temperature and the dark period temperature is not particularly limited and the light period temperature and the dark period temperature can be controlled by using a known method in the related art. For example, the control of the light period temperature and the dark period temperature can be performed by monitoring the light period temperature and the dark period temperature of the environment with the above-described thermometer, and sending hot air or cold air as necessary.

The relative humidity in the cultivation environment of the fruit vegetable plant is preferably 40% to 80% and more preferably 50% to 75%. By setting the relative humidity in the cultivation environment of the fruit vegetable plant within the above-described numerical range, the quality, the weight, and the like of the fruit to be harvested can be improved.

In the present disclosure, the relative humidity is measured by disposing a hygrometer at a position 1 cm away from the fruit vegetable plant. As the hygrometer, for example, TR-74Ui manufactured by T & D Co., Ltd. and the attached sensors can be used.

A method of controlling the humidity is not particularly limited, and the humidity can be controlled by a known method in the related art. For example, the humidity condition can be controlled by monitoring the humidity of the environment with the above-described hygrometer and using, as necessary, an air conditioning device having a humidifying function and a dehumidifying function.

A carbon dioxide concentration in the cultivation environment of the fruit vegetable plant is preferably 300 ppm or more, more preferably 400 ppm or more, further more preferably 800 ppm or more, and particularly preferably 1,000 ppm or more. By setting the carbon dioxide concentration in the cultivation environment of the fruit vegetable plant within the above-described numerical range, the quality and the weight of the fruit to be harvested can be further improved. The upper limit of the carbon dioxide concentration is not particularly limited and can be set to 4,000 ppm or less.

In the present disclosure, the carbon dioxide concentration is measured in a state where a carbon dioxide densitometer is disposed at a position 1 cm away from the fruit vegetable plant. As the carbon dioxide densitometer, for example, an Air Checker 7722 manufactured by SB Environment Corporation can be used.

The method of controlling the carbon dioxide concentration is not particularly limited, and the carbon dioxide concentration can be controlled by a known method in the related art. For example, the carbon dioxide concentration can be controlled by monitoring the carbon dioxide concentration in the environment with the above-described carbon dioxide densitometer and using an air conditioning device or the like, as necessary.

The fruit vegetable plant may be cultivated by soil cultivation or hydroponic cultivation, but from a viewpoint of improving the hygiene of the cultivation environment, hydroponic cultivation is preferably performed.

In a case where the fruit vegetable plant is cultivated by hydroponic cultivation, for example, a support table provided with urethane sponge, rockwool, and water-retaining sheet, and the like can be used as the support body for supporting a root part.

In a case where the fruit vegetable plant is cultivated by hydroponic cultivation, a method of supplying a liquid fertilizer is not particularly limited, and examples of the method include a flooded hydroponic cultivation in which a support body is dipped in the liquid fertilizer for cultivation, a spray type hydroponic cultivation in which a liquid fertilizer is sprayed onto a support body, and a drop type hydroponic cultivation in which a liquid fertilizer is added dropwise onto a root part or a support body, and the like.

The liquid fertilizer to be used is not particularly limited as long as it is suitable for cultivating fruit vegetable plants. For example, commercially available mixed liquid fertilizers (such as OAT HOUSE No. 1 manufactured by OAT Agrio Co., Ltd. and Hyponica liquid fertilizer manufactured by KYOWA Co., Ltd.) may be used by dissolving and diluting the mixed liquid fertilizers to a desired concentration, or a straight fertilizer may be used in combination based on a known fertilizer composition such as the Ensi formulation and the Yamazaki formulation.

For the pollination after flowering, a method suitable for the crop may be appropriately selected from among general methods and performed. For example, a hormone treatment may be performed using the Tomato Tone Spray of Sumitomo chemical garden products inc. In addition, vibration pollination may be performed using a blower or a vibration device. In addition, pollination may be performed using insects such as bumblebees.

A concentration of the liquid fertilizer can be indicated by an Electrical Conductivity (EC) value. From the viewpoints of the quality, weight, and the like of the fruit to be harvested, the concentration of the liquid fertilizer is preferably 0.5 ds/m to 8.0 ds/m and more preferably 1.0 ds/m to 5.0 ds/m. In addition, the concentration of the liquid fertilizer may be adjusted according to the growth of the fruit vegetable plant.

An EC value is measured at 25°C by using an electric conductivity meter (for example, HI98131 manufactured by Hanna Instruments).

In the fruit vegetable plant, it is preferable to remove the leaves below the fruit truss in which the harvesting is completed. By removing the leaves below the fruit truss in which the harvesting is completed, the cultivation efficiency can be improved.

The lateral buds of the fruit vegetable plant may be appropriately removed (lateral bud picking).

The fruit vegetable plant is not particularly limited, and examples thereof include Solanaceae family plants such as a tomato, an eggplant, and a sweet pepper, Cucurbitaceae family plants such as a melon, a cucumber, a pumpkin, and a zucchini, Fabaceae family plants such as a green bean, a pea, and a broad bean, Malvaceae family plants such as an okra, Poaceae family plants such as corn, and the like. Among the above-described fruit vegetable plants, the Solanaceae family plants and Cucurbitaceae family plants are suitable for the method of cultivating of the present disclosure, a tomato or a melon is more suitable, and the tomato is still more suitable.

The tomato includes a medium size tomato, a cherry tomato, a high-sugar tomato, and the like. In addition, the melon includes netted melons such as green flesh and orange flesh, and non-netted melons.

[Cultivation apparatus for fruit vegetable plant]

The cultivation apparatus for a fruit vegetable plant according to the present disclosure includes a light source that irradiates with artificial light from side surface direction and from upper surface direction of the fruit vegetable plant, and a control mechanism that controls a light irradiation condition such that a variation in light intensity between plant parts is generated in a case of irradiating the fruit vegetable plant with the artificial light (hereinafter, also referred to as a "light intensity control mechanism").

As a light source that emits artificial light, the above-described light source can be used. In addition, the above-described cultivation system can be applied as the cultivation apparatus which is provided with a light source.

The light intensity control mechanism controls the light irradiation conditions of the artificial light with which the fruit vegetable plant is irradiated such that a variation in light intensity between plant parts is generated in the fruit vegetable plant.

In one embodiment, a light quantum sensor that measures light intensity is disposed at the growth point of a fruit vegetable plant and at the central part of the lowest leaf of the fruit vegetable plant. The light intensity control mechanism acquires data of the light intensity from the light quantum sensor and calculates a light intensity ratio. As the light intensity ratio, it is preferable that the ratio of the light intensity $I_b$ of the artificial light with which the central part of the lowest leaf of the fruit vegetable plant is irradiated to the light intensity It of the artificial light with which the growth point of the fruit vegetable plant is irradiated satisfies the following relationship. As a result, the light intensity at the growth point and its vicinity in the fruit vegetable plant is further increased.

$$I_b/I_t \leq 0.8.$$

In a case where the calculated light intensity ratio $I_b/I_t$ is more than 0.8, the light intensity control mechanism sends a signal for adjusting the angle of the artificial light to be irradiated, the number of irradiation directions of the artificial light to be irradiated, the light intensity of the artificial light, and the like, to the light source to adjust the light intensity ratio to be within the above-described range.

From the viewpoint of improving the fruit setting rate and the viewpoint of improving the space utilization efficiency of the plant factory, it is preferable that the light intensity control mechanism controls the light irradiation condition such that the ratio ($I_b/I_t$) of the light intensity of the artificial light with which the central part of the lowest leaf of the fruit vegetable plant is irradiated to the light intensity of the artificial light with which the growth point of the fruit vegetable plant is irradiated is 0.8 or less.

From the viewpoint of improving the weight of the fruit to be harvested, it is preferable that the light intensity control mechanism controls the light irradiation condition such that the above-described light intensity ratio is more preferably 0.7 or less (still more preferably 0.5 or less).

From the viewpoint of improving the weight of the fruit to be harvested, it is preferable that the light intensity control mechanism controls the light irradiation condition such that the above-described light intensity ratio is preferably 0.3 or more (more preferably 0.4 or more).

In one embodiment, the light control mechanism can control the above-described light intensity ratio by changing the number of light sources that irradiate the fruit vegetable plant with the artificial light, the irradiation angle of the artificial light with which the fruit vegetable plant is irradiated, and the like.

Examples

Hereinafter, the above-described embodiment will be specifically described with reference to Examples, but the above-described embodiment is not limited to these Examples.

<Example 1-1>

Tomato seeds (variety: Momotaro York (registered trademark)) were sown on a 5 cm square urethane sponge (manufactured by Kyowa Limited, yellow medium for fruit and vegetable) sufficiently containing pure water, and stored in the darkness under the conditions of a temperature of 28°C and a relative humidity of 70% for three days.

After confirming the rhizogenesis of the tomato seeds, the seedlings were raised for 17 days using a flooded hydroponic cultivation. As the liquid fertilizer, a Hyponica liquid fertilizer manufactured by Kyowa Co., Ltd. was used by being diluted with pure water to 500 times.

As a light source in the seedling raising period, LED (CIVILIGHT, DPT2RB120Q33, manufactured by SHOWA DENKO K.K.) was used, and the upper surface of the urethane sponge was irradiated with light such that the light intensity was 250 $\mu$mol/m$^2$/s. At the time of adjusting the light intensity, the amounts of red light (wavelength of 660 nm) and blue light (wavelength of 450 nm) from the above-described LED were adjusted such that the light amount ratio of red to blue was 2:1. Other environmental conditions during seedling raising were set as follows.

-Seedling raising environment conditions-

· Light-dark cycle: 16 hours (light period)/8 hours (dark period)
· Temperature: 27°C (light period)/19°C (dark period)
· Relative humidity: 70%
· Carbon dioxide concentration: 1,000 ppm
· Distance between stocks: 15 cm

The 10 tomato plant seedlings obtained by the above-described seedling raising were grown under the cultivation conditions shown below (hereinafter, a growth step). During the growth period, according to a standard method, one-tailoring was performed to arrange (lateral bud nipping, defoliation, and the like) and attract branches, and after three flower clusters (first to third flower clusters) settled on the main branch, and then it was confirmed that three main leaves were developed on an upper side of the third flower cluster, branches were pinched while leaving the main leaves.

The tomato fruit that had fruited by the third flower cluster was harvested, and the cultivation was completed.

In a case where the number of buds exceeded six, the buds were pinched from the seventh bud. In addition, in a case where the number of fruit setting exceeded four, the set fruit were removed from the fifth set fruit.

In the growth step, the number of buds, the number of set fruits, and the number of harvests for each plant were recorded. The fruit setting rate (%; [number of set fruits/number of buds] $\times$ 100) and the average weight per fruit (hereinafter also referred to as "average fruit weight") were obtained. The results are shown in Table 1.

The fruit setting rate and the average fruit weight were also obtained for Examples 1-2 to 1-5 and Comparative Examples 1-1 and 1-2, and are shown together in Table 1.

-Cultivation conditions in growth step-

· Support body: urethane sponge used in the seedling raising step is used as it is
· Light-dark cycle: 16 hours (light period)/8 hours (dark period)
· Relative temperature: 27°C (light period)/19°C (dark period)
· Humidity: 70%
· Nutrient liquid: "Hyponica liquid fertilizer" manufactured by Kyowa Co., Ltd. was used by being diluted 250 times with pure water
· Carbon dioxide concentration: 1,000 ppm
· Light irradiation condition: during the growth period, the tomato plant was always irradiated with artificial light from a direction of 0° ± 20° and a direction of 90° ± 20° with respect to the growth direction of the stem of the tomato plant. A variation in light intensity between plant parts was generated such that the light intensity ratio (light intensity $I_b$ of the central part of the lowest leaf/light intensity It of the growth point of the fruit vegetable plant (tomato plant)) was 0.5. The light intensity of the central part of the lowest leaf of the fruit vegetable plant was 120 μmol/m$^2$/s to 130 μmol/m$^2$/s and the light intensity of the growth point of the fruit vegetable plant was 240 μmol/m$^2$/s to 260 μmol/m$^2$/s.

<Example 1-2>

The tomato plant was cultivated and evaluated in the same manner as in Example 1-1, except that the light irradiation conditions in the cultivation conditions in the growth step were changed as follows.

-Cultivation conditions in growth step-

· Light irradiation conditions: Only in the period after confirmation of first flower bud differentiation until confirmation of last fruit setting (hereinafter, also referred to as "period A"), the tomato plant was irradiated with artificial light from a direction of 0° ± 20° and a direction of 90° ± 20° with respect to the growth direction of the stem. A variation in light intensity between plant parts was created such that the light intensity ratio (central part $I_b$ of the lowest leaf/light intensity It of the growth point of the fruit vegetable plant (tomato plant)) was 0.5. The light intensity $I_b$ of the central part of the lowest leaf of the fruit vegetable plant was 120 μmol/m$^2$/s to 130 μmol/m$^2$/s and the light intensity It of the growth point of the fruit vegetable plant was 240 μmol/m$^2$/s to 260 μmol/m$^2$/s.

In a period other than the above-described period (hereinafter, also referred to as "period B"), the irradiation with artificial light from a direction of 0° ± 30° with respect to the growth direction of the stem of the tomato plant was stopped, and the tomato plant was irradiated with artificial light only from a direction of 90° ± 30° with respect to the growth direction of the stem of the tomato plant. The light intensity ratio was set to 1.0. The light intensity $I_b$ of the central part of the lowest leaf of the fruit vegetable plant and the light intensity It of the growth point of the fruit vegetable plant were both set to 120 μmol/m$^2$/s to 130 μmol/m$^2$/s.

<Example 1-3>

The tomato plant was cultivated and evaluated in the same manner as in Example 1-2, except that the light intensity ratio in the period A was changed to 0.8. The light intensity $I_b$ of the central part of the lowest leaf of the fruit vegetable plant was 120 μmol/m$^2$/s to 130 μmol/m$^2$/s and the light intensity It of the growth point of the fruit vegetable plant was 150 μmol/m$^2$/s to 163 μmol/m$^2$/s.

<Example 1-4>

The tomato plant was cultivated and evaluated in the same manner as in Example 1-1, except that at the time of adjusting the light intensity, the amounts of red light (wavelength of 660 nm) and blue light (wavelength of 450 nm) from the above-described LED were adjusted such that the light amount ratio of red to blue was 10: 1 as a light source in the seedling raising period.

<Example 1-5>

The tomato plant was cultivated and evaluated in the same manner as in Example 1-1, except that a white LED (PGL-NE-200NWD, manufactured by Ryoden corporation) was used as a light source in the seedling raising period.

<Comparative Example 1-1>

The tomato plant was cultivated and evaluated in the same manner as in Example 1-1, except that the light irradiation conditions in the cultivation conditions in the growth step were changed as follows.

-Cultivation conditions in growth step-

· Light irradiation condition: during the growth period, the tomato plant was always irradiated with artificial light only from a direction of 90° ± 30° with respect to the growth direction of the stem of the tomato plant. The light intensity ratio was set to 1.0. The light intensity $I_b$ of the central part of the lowest leaf of the fruit vegetable plant and the light intensity It of the growth point of the fruit vegetable plant were both set to 120 $\mu$mol/m$^2$/s to 130 $\mu$mol/m$^2$/s.

<Comparative Example 1-2>

The tomato plant was cultivated and evaluated in the same manner as in Example 1-1, except that the light irradiation conditions in the cultivation conditions in the growth step were changed as follows.

-Cultivation conditions in growth step-

· Light irradiation condition: during the growth period, the tomato plant was always irradiated with artificial light from a direction of 0° ± 30° with respect to the growth direction of the stem of the tomato plant. The light intensity ratio was set to 0.2. The light intensity $I_b$ of the central part of the lowest leaf of the fruit vegetable plant was 48 $\mu$mol/m$^2$/s to 52 $\mu$mol/m$^2$/s and the light intensity It of the growth point of the fruit vegetable plant was 240 $\mu$mol/m$^2$/s to 260 $\mu$mol/m$^2$/s.

<Example 2-1>

Melon seeds (variety: RENON (registered trademark)) were sown on a 5 cm square urethane sponge (manufactured by Kyowa Limited, yellow medium for fruit and vegetable) sufficiently containing pure water, and stored in the darkness under the conditions of a temperature of 28°C and a relative humidity of 70% for three days.
After confirming the rhizogenesis of the melon seeds, the seedlings were raised for 17 days using a flooded hydroponic cultivation (hereinafter, seedling raising step). As the liquid fertilizer, the "Hyponica liquid fertilizer" manufactured by Kyowa Co., Ltd. was used by being diluted with pure water to 500 times.
As a light source in the seedling raising period, LED (CIVILIGHT, DPT2RB120Q33) manufactured by SHOWADENKO K.K. was used, and the upper surface of the urethane sponge was irradiated with light such that the light intensity was 250 $\mu$mol/m$^2$/s. The environmental conditions in the other seedling raising steps were set as follows.

-Environmental conditions in seedling raising step-

· Light-dark cycle: 16 hours (light period)/8 hours (dark period)
· Temperature: 27°C (light period)/19°C (dark period)
· Relative humidity: 70%
· Carbon dioxide concentration: 1,000 ppm
· Distance between stocks: 15 cm

The 10 melon seedlings obtained by the above-described seedling raising were grown under the cultivation conditions shown below. During the growth period, according to a standard method, one-tailoring was performed to arrange (lateral bud nipping) and pollination treatment was performed on the female flowers until fruit setting on the main branch was confirmed.
After the first fruit setting was confirmed, pollination treatment was not performed, and the flowers were removed. In addition, in a case where the fruit setting of a plurality of fruits was confirmed simultaneously, cultivation was continued while maintaining the plurality of fruits for about one week. Afterward, only the largest fruit was left, and the other smaller fruits were removed.
Each plant was harvested, and the cultivation was completed.
In the growth step, the number of female flower buds, the number of set fruits, and the number of harvests for each plant were recorded. The fruit setting rate ([number of set fruits/number of buds] × 100) and the weight per fruit (hereinafter also referred to as "average fruit weight") were obtained and summarized in Table 2. In the following Comparative Example 2-1, the fruit setting rate and the average fruit weight were obtained and are summarized in Table 2.

-Cultivation conditions in growth step-

· Support body: urethane sponge used in the seedling raising step is used as it is

· Light-dark cycle: 16 hours (light period)/8 hours (dark period)

· Temperature: 27°C (light period)/19°C (dark period)

· Humidity: 70%

· Nutrient liquid: "Hyponica liquid fertilizer" manufactured by Kyowa Co., Ltd. was used by being diluted 150 times with pure water

· Carbon dioxide concentration: 1,000 ppm

· Light irradiation: Only in the period after confirmation of first flower bud differentiation until confirmation of last fruit setting (hereinafter, also referred to as "period A"), the melon plant was irradiated with artificial light from a direction of 0° ± 30° and a direction of 90° ± 30° with respect to the growth direction of the stem. The light intensity ratio (central part $I_b$ of the lowest leaf/light intensity It of the growth point of the fruit vegetable plant) was set to 0.5. The light intensity $I_b$ of the central part of the lowest leaf of the fruit vegetable plant was 120 $\mu$mol/m$^2$/s to 130 $\mu$mol/m$^2$/s and the light intensity It of the growth point of the fruit vegetable plant was 240 $\mu$mol/m$^2$/s to 260 $\mu$mol/m$^2$/s.

In a period other than the above-described period (hereinafter, also referred to as "period B"), the irradiation with artificial light from a direction of 0° ± 30° with respect to the growth direction of the stem of the melon plant was stopped, and the melon plant was irradiated with artificial light only from a direction of 90° ± 30° with respect to the growth direction of the stem of the melon plant. The light intensity ratio was set to 1.0. The light intensity $I_b$ of the central part of the lowest leaf of the fruit vegetable plant was 120 $\mu$mol/m$^2$/s to 130 $\mu$mol/m$^2$/s and the light intensity It of the growth point of the fruit vegetable plant was 120 $\mu$mol/m$^2$/s to 130 $\mu$mol/m$^2$/s.

<Comparative Example 2-1>

The melon plant was cultivated and evaluated in the same manner as in Example 2-1, except that the light irradiation conditions in the cultivation conditions in the growth step were changed as follows.

-Cultivation conditions in growth step-

· Light irradiation condition: during the growth period, the melon plant was always irradiated with artificial light from a direction of 90° ± 30° with respect to the growth direction of the stem of the tomato plant. The light intensity ratio was set to 1.0.

[Table 1]

|  | Fruit setting rate | Average fruit weight (g) |
|---|---|---|
| Example 1-1 | 80% or more | 130 |
| Example 1-2 | 80% or more | 130 |
| Example 1-3 | 80% or more | 110 |
| Example 1-4 | 80% or more | 130 |
| Example 1-5 | 80% or more | 110 |
| Comparative Example 1-1 | 35% | 110 |
| Comparative Example 1-2 | 70% | 90 |

[Table 2]

|  | Fruit setting rate | Average fruit weight (g) |
|---|---|---|
| Example 2-1 | 80% or more | 1500 |
| Comparative Example 2-1 | 30% | 1300 |

As shown in Tables 1 and 2, it was found that the method of cultivating a fruit vegetable plant in the examples was superior in fruit setting rate as compared with the method of cultivating a fruit vegetable plant in the comparative example.

(Explanation of References)

1: cultivation stock
3: LED light source
5a, 5b: reflection sheet
7a, 7b: lighting device
10, 20: cultivation system

The entirety of the disclosures of Japanese Patent Application No. 2022-077110 filed on May 9, 2022 and Japanese Patent Application No. 2023-023805 filed on February 17, 2023 is incorporated into the present specification by reference.

All literatures, patent applications, and technical standards described in the present specification are incorporated in the present specification by reference to the same extent as in a case where the individual literatures, patent applications, and technical standards are specifically and individually stated to be incorporated by reference.

**Claims**

1. A method of cultivating a fruit vegetable plant, comprising:
   irradiating a fruit vegetable plant with artificial light under a light irradiation condition which achieves a fruit setting rate of 80% or more.

2. The method of cultivating a fruit vegetable plant according to claim 1,
   wherein the fruit vegetable plant is a tomato.

3. The method of cultivating a fruit vegetable plant according to claim 1,
   wherein the fruit vegetable plant is irradiated with the artificial light from a direction of 0° ± 30° and a direction of 90° ± 30° with respect to a growth direction of a stem of the fruit vegetable plant.

4. The method of cultivating a fruit vegetable plant according to claim 1,
   wherein, after confirmation of first flower bud differentiation of the fruit vegetable plant until confirmation of last fruit setting, the fruit vegetable plant is irradiated with the artificial light from a direction of 0° ± 30° and a direction of 90° ± 30° with respect to a growth direction of a stem of the fruit vegetable plant.

5. The method of cultivating a fruit vegetable plant according to claim 1,
   wherein a variation in light intensity between plant parts is generated in the fruit vegetable plant by the irradiation with the artificial light.

6. The method of cultivating a fruit vegetable plant according to claim 5,
   wherein a light intensity $I_t$ of the artificial light, with which a growth point of the fruit vegetable plant is irradiated, and a light intensity $I_b$ of the artificial light, with which a central part of a lowest leaf of the fruit vegetable plant is irradiated, satisfy the following relationship:

$$I_b/I_t \leq 0.8.$$

7. The method of cultivating a fruit vegetable plant according to claim 1,
   wherein, after confirmation of first flower bud differentiation of the fruit vegetable plant until confirmation of last fruit setting, a variation in light intensity between plant parts is generated.

8. A cultivation apparatus for a fruit vegetable plant, comprising:

   a light source that irradiates with artificial light from a side surface direction and from an upper surface direction of the fruit vegetable plant; and
   a control mechanism that controls a light irradiation condition such that a variation in light intensity between plant parts is generated in a case of irradiating the fruit vegetable plant with the artificial light.

9. The cultivation apparatus for a fruit vegetable plant according to claim 8,
   wherein the control mechanism controls the light irradiation condition such that a light intensity $I_t$ of the artificial light, with which a growth point of the fruit vegetable plant is irradiated, and a light intensity $I_b$ of the artificial light, with which a central part of a lowest leaf of the fruit vegetable plant is irradiated, satisfy the following relationship:

$$I_b/I_t \leq 0.8.$$

10. A tomato plant that is cultivated by the method of cultivating a fruit vegetable plant according to any one of claims 1 to 7.

FIG. 1

# FIG. 2

# FIG. 3

INTERNATIONAL SEARCH REPORT

| International application No. |
| --- |
| **PCT/JP2023/016010** |

### A. CLASSIFICATION OF SUBJECT MATTER

*A01G 7/00*(2006.01)i; *A01G 22/05*(2018.01)i
FI: A01G7/00 601A; A01G22/05; A01G22/05 Z

According to International Patent Classification (IPC) or to both national classification and IPC

### B. FIELDS SEARCHED

Minimum documentation searched (classification system followed by classification symbols)

A01G7/00; A01G22/05

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | JP 2021-122262 A (PANASONIC IP MAN CORP) 30 August 2021 (2021-08-30) paragraphs [0013]-[0130] | 1-10 |
| A | JP 2001-28947 A (YAMATO KOGYO KK) 06 February 2001 (2001-02-06) paragraphs [0016], [0017] | 1-10 |
| A | WO 2011/007868 A1 (SHIKOKU ELECTRIC POWER COMPANY INCORPORATED) 20 January 2011 (2011-01-20) paragraphs [0066]-[0075] | 1-10 |
| A | JP 2009-17827 A (PANASONIC ELECTRIC WORKS CO LTD) 29 January 2009 (2009-01-29) paragraphs [0012]-[0036] | 1-10 |
| A | WO 2007/058347 A1 (NATIONAL UNIVERSITY CORPORATION CHIBA UNIVERSITY) 24 May 2007 (2007-05-24) paragraphs [0013]-[0020] | 1-10 |

☐ Further documents are listed in the continuation of Box C.    ☑ See patent family annex.

| | |
| --- | --- |
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
| --- | --- |
| **25 May 2023** | **06 June 2023** |

| Name and mailing address of the ISA/JP <br><br> **Japan Patent Office (ISA/JP)** <br> **3-4-3 Kasumigaseki, Chiyoda-ku, Tokyo 100-8915** <br> **Japan** | Authorized officer <br><br><br> Telephone No. |

Form PCT/ISA/210 (second sheet) (January 2015)

**INTERNATIONAL SEARCH REPORT**
Information on patent family members

International application No.

**PCT/JP2023/016010**

| Patent document cited in search report | | | Publication date (day/month/year) | Patent family member(s) | Publication date (day/month/year) |
|---|---|---|---|---|---|
| JP | 2021-122262 | A | 30 August 2021 | (Family: none) | |
| JP | 2001-28947 | A | 06 February 2001 | (Family: none) | |
| WO | 2011/007868 | A1 | 20 January 2011 | (Family: none) | |
| JP | 2009-17827 | A | 29 January 2009 | (Family: none) | |
| WO | 2007/058347 | A1 | 24 May 2007 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011050288 A
- JP 2022077110 A
- JP 2023023805 A